# EUROPEAN PATENT SPECIFICATION

(11) **EP 3 130 577 B1**
(45) Date of publication and mention of the grant of the patent: **12.07.2023**
(21) Application number: 16183659.8
(22) Date of filing: 11.08.2016
(51) Int. Cl.: C04B 41/89, C04B 41/00, C04B 41/52, F01D 5/28

(54) **HOT DUST RESISTANT ENVIRONMENTAL BARRIER COATINGS**
HEISSSTAUBBESTÄNDIGE UMGEBUNGSSCHUTZSCHICHTEN
REVÊTEMENTS FORMANT UNE BARRIÈRE ENVIRONNEMENTALE RÉSISTANTS À LA POUSSIÈRE CHAUDE

(30) Priority: 14.08.2015 US 201514826765
(43) Date of publication of application: 15.02.2017
(73) Proprietor: General Electric Company, Schenectady, NY 12345 (US)
(72) Inventor: LUTHRA, Krishan Lal, Niskayuna, NY 12309 (US); MESCHTER, Peter Joel, Niskayuna, NY 37064 (US); RAMASWAMY, Vidya, Niskayuna, NY 12309 (US); CAO, Hongbo, Niskayuna, NY 12309 (US)
(74) Representative: Openshaw & Co.

(56) References cited:
- EP-A2- 2 287 135
- EP-A2- 2 918 570
- WO-A1-2014/137804
- US-A1- 2014 037 969

## Description

### BACKGROUND

The present technology relates to environmental barrier coatings, and more particularly to environmental barrier coatings that offer improved resistance to dust deposits.

Higher operating temperatures for gas turbine engines are continuously being sought in order to improve their efficiency. However, as operating temperatures increase, the high temperature durability of materials of manufacture of engine components must be maintained. Significant advances in high temperature capabilities of engine components have been achieved through improved formulation and processing of iron, nickel, and cobalt-based superalloys. While superalloys have found wide use for components in gas turbine engines, and especially in the higher temperature sections, alternative lighter-weight, higher-temperature component materials have been proposed.

Ceramic matrix composites (CMCs) are a class of materials that include a reinforcing material surrounded by a ceramic matrix phase. Such materials, along with certain monolithic ceramics (i.e. ceramic materials without a reinforcing material), are currently being used in a variety of high temperature applications. These ceramic materials are lightweight compared to superalloys, yet can still provide strength and durability to components made therefrom. Therefore, such materials are currently being considered for many gas turbine components used in higher temperature sections of gas turbine engines, such as airfoils (blades and vanes), combustor liners, shrouds and other similar components, that can benefit from the lighter-weight and higher temperature capability offered by these materials.

CMC's and monolithic ceramic components can be coated with environmental barrier coatings (EBCs) to protect them from the harsh environments of high temperature engine sections. EBCs can provide a dense, hermetic seal against the corrosive gases in the hot combustion environment, which can rapidly oxidize silicon-containing CMCs and monolithic ceramics. Additionally, silicon oxide is not stable in high temperature steam, but is converted to volatile (gaseous) silicon hydroxide species. Thus, EBCs can help prevent dimensional changes in the ceramic component due to such oxidation and volatilization processes.

Aircraft engines including CMC components are being operated in parts of the world where dust ingested with compressed air can deposit on the surfaces of hot stage CMC components and degrade the life of the EBCs. Hot gas path engine components can experience loss of performance resulting from intake and deposition of environmental particulate matter, especially during idling, takeoff, and landing. Accumulation of dust particles on the surfaces of gas turbine components can result in component overheating; in addition, molten dust deposits can react chemically with EBC's to cause EBC cracking and spallation, followed by undesirable exposure of the underlying CMC's to the engine environment. Dust deposition can thus reduce EBC durability and lead to premature degradation of CMC's and decreased component life. There is a requirement for improvements in composition and properties of EBC's to improve resistance to dust deposition.

WO 2014 137804 A1 and EP 2 918 570 A2 (published after the priority date of the pending application) describe EBCs for high temperature ceramic components comprising at least one rare earth disilicate layer and at least one rare earth monosilicate layer, wherein at least one of the at least one rare earth disilicate layer or the at least one rare earth monosilicate layer includes an alkaline earth oxide dopant.

US 2014/0037969 A1 describes a coating system comprising a rare earth disilicate layer and a rare earth monosilicate layer. EP 2 287 135 A2 describes further EBCs for high temperature ceramic components.

### SUMMARY

According to one example of the present technology, an environmental barrier coating system for a component of a gas turbine is provided according to claim 1 and comprises at least one layer of rare earth disilicate and at least one layer of rare earth monosilicate. At least one of the at least one layer of rare earth disilicate or the at least one layer of rare earth monosilicate includes an alkaline earth oxide dopant.

According to another example of the present technology, a component of a gas turbine engine according to claim 3 is coated with an environmental barrier coating system as described herein.

### BRIEF DESCRIPTION OF THE DRAWINGS

Examples of the present technology set forth herein will be better understood from the following description in conjunction with the accompanying figures, in which like reference numerals identify like elements, wherein:
FIG. 1 is a schematic cross sectional view of an environmental barrier coating system usable with the present technology;
FIG. 2 is a schematic cross sectional view of an article or component having an environmental barrier coating system according to the present technology; and
FIG. 3 is a schematic illustration of an example of rare earth oxide/silica/alkaline earth oxide compositional space, drawn for convenience on a ternary-style composition diagram of a [0012] type commonly used in the art, with certain compositions highlighted in accordance with examples of the present technology.

### DETAILED DESCRIPTION

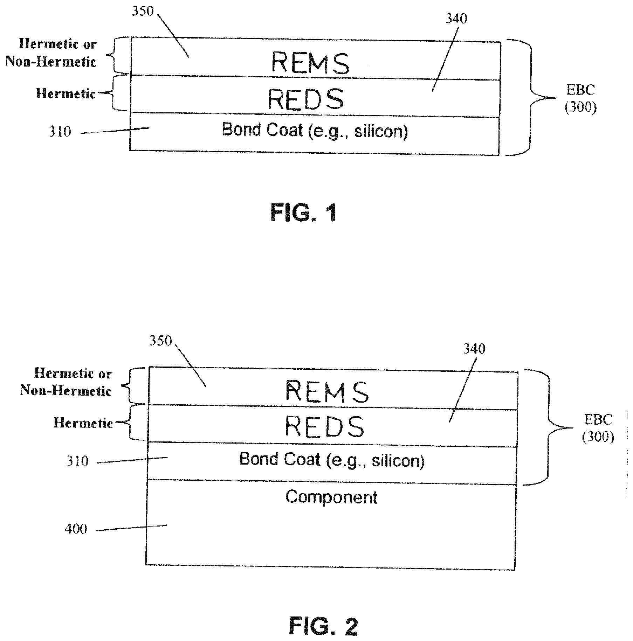

Referring to FIG. 1, an EBC system 300 may include a bond coat 310, a rare earth disilicate (REDS) layer 340 and a hermetic or non-hermetic rare earth monosilicate (REMS) layer 350. The REDS layer 340 should preferably be hermetic. As used herein, the term "rare earth monosilicate" refers to composition of the formula RE₂SiO₅, where RE is Sc, Y, La, Ce, Pr, Nd, Pm, Sm, Eu, Gd, Tb, Dy, Ho, Er, Tm, Yb, Lu, or combinations thereof. As used herein, the term "rare earth disilicate" refers to a composition of the formula RE₂Si₂O₇, where RE is Sc, Y, La, Ce, Pr, Nd, Pm, Sm, Eu, Gd, Tb, Dy, Ho, Er, Tm, Yb, Lu, or combinations thereof. As used herein, the term "rare earth silicate" refers to rare earth monosilicates and rare earth disilicates. As used herein the term "substantially hermetic" means that the layer or coating has a gas permeability that is below about 2×10⁻¹⁴ cm² (about 2×10⁻⁶ Darcy), the detection limit of commonly used measurement techniques. The EBC system 300 may include a bond coat 310 (e.g., silicon as disclosed in U.S. 6,299,988, incorporated herein by reference).

Referring to FIG. 2, a component 400 of a gas turbine engine may include an EBC system 300 as shown in FIG. 1. The component may be formed of, for example, monolithic ceramic or a ceramic matrix composite. As used herein, the term "ceramic matrix composite" refers to a material that includes a reinforcing material surrounded by a ceramic matrix phase.

The bond coat of the EBC systems disclosed herein may have a thickness of between about 10 µm and about 200 µm, for example from about 25-150 µm, or from about 50-125 µm. The rare earth disilicate-based layer may have a thickness of between about 10 µm and about 250 µm, for example from about 25-200 µm, or from about 50-150 µm. The rare earth monosilicate-based layer may have a thickness of between about 10 µm and about 100 µm, for example from about 10-75 µm, or from about 25-75 µm.

The various characteristics and embodiments of the rare earth silicate-based substantially hermetic layer as disclosed herein also relate to a thermal spray feedstock for producing a rare earth silicate-based substantially hermetic layer. For example, suitable rare earth silicates (RES) for use in the rare earth silicate-based hermetic layer produced by the thermal spray feedstock can include, without limitation, a rare earth element selected from the group consisting of ytterbium (Yb), yttrium (Y), scandium (Sc), lutetium (Lu), lanthanum (La), cerium (Ce), praseodymium (Pr), neodymium (Nd), samarium (Sm), dysprosium (Dy), holmium (Ho), erbium (Er), thulium (Tm), europium (Eu), gadolinium (Gd), terbium (Tb), promethium (Pm), and mixtures thereof.

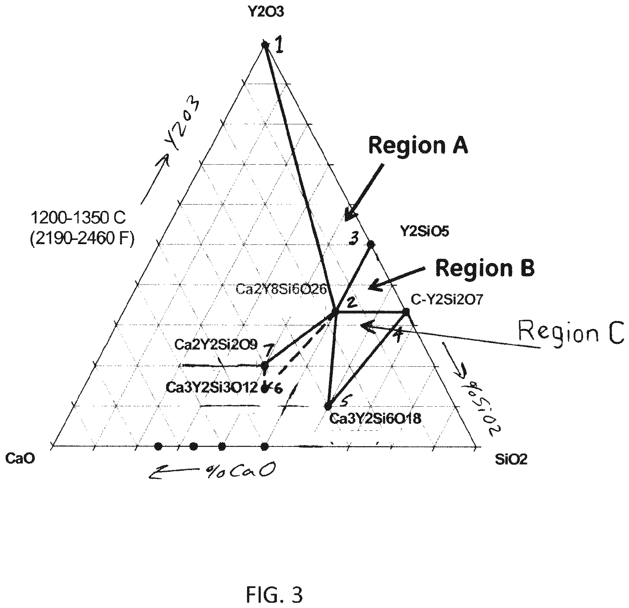

Referring to FIG. 3, components comprising alkaline earth oxides, for example CaO, MgO, SrO, BaO, or combinations thereof, are added to the EBC system without significantly changing (e.g. less than about 10%) the coefficients of thermal expansion of the EBC layers, thus improving the corrosion resistance of the EBC system layers 340 and/or 350 to solid or molten dust deposits while maintaining the integrity of the EBC system against cracking and spalling. Addition of alkaline earth oxides to the REDS layer 340, the REMS layer 350, or both, promotes the formation of an apatite phase in the EBC layers and increases the chemical activity of the alkaline earth oxide to a level that reduces the driving force for chemical reaction with dust deposits. FIG. 3 schematically illustrates an example of rare earth oxide/silica/alkaline earth oxide compositional space, drawn for convenience on a ternary-style composition diagram of a type commonly used in the art, in which the mole % of each composition is defined from 0-100% on its respective side of the compositional space. In the example of FIG. 3, the rare earth oxide is Y₂O₃ and the alkaline earth oxide is CaO.

In one example, the composition of the REMS layer 350 is shown in region A, which is defined by the space encompassed by points 1-2-3, where point 1 is Y₂O₃, point 2 is Ca₂Y₈Si₆O₂₆, and point 3 is Y₂SiO₅. The mole % of the CaO dopant may be about 1-16%, for example about 10%. The amount of dopant added should not substantially change (i.e. increase or decrease) the coefficient of thermal expansion (CTE) of the REMS layer 350, the amount of dopant added resulting in either a decrease or an increase in the CTE of the REMS layer 350 of less than about 10%. Larger decreases in the CTE of the REMS layer 350 are acceptable.

The composition of the REDS layer 340 is shown in region B, which is defined by the space encompassed by points 2-3-4, where point 4 is Y₂Si₂O₇. The mole % of the CaO dopant may be about 1-16%, for example about 10%. The amount of dopant added should not substantially change the coefficient of thermal expansion (CTE) of the REDS layer 340, for example the amount of dopant added should result in a change (i.e. an increase or decrease) of the CTE of the REDS layer 340 of less than about 10%. As another example, not part of the claimed invention, the amount of the dopant increases the coefficient of thermal expansion of the REDS layer 340 by no more than about 25%.

In another example, the composition of the REDS layer 340 is shown in Region C, which is defined by the space encompassed by points 2, 4, and 5. The mole % of dopant may be about 5-20%, for example about 10%. Again, the amount of dopant should not change the coefficient of the REDS layer 340 by more than about 10%.

Alkaline-earth-rare-earth-silicates may be added to the above phase regions for short-term protection. The alkaline-earth-rare-earth-silicates may be a composition of the formula AE·RE·S, where AE is Be, Mg, Ca, Sr, Ba, Ra, or combinations thereof, and RE is Y, La, Ce, Pr, Nd, Pm, Sm, Eu, Gd, Tb, Dy, Ho, Er, Tm, Yb, Lu, or combinations thereof, and S is a compound containing an anionic silicon compound. For example calcium yttrium silicate (CaYS), including Ca₃Y₂Si₆O₁₈ (point 5), Ca₂Y₂Si₂O₉ (point 6) and/or Ca₃Y₂Si₃O₁₂ (point 7) may be added to the above phase regions for short-term protection. With time, some of these additions are expected to change the chemistry of the coating layers. Any compositions within the composition space defined by points 2-5-7 and/or 2-6-7 may be added to the phase regions A and/or B/and/or C for short-term protection. In such case, the amount of CaO dopant can be higher, exceeding 16%, but preferably remain below 25%.

Although various examples have been depicted and described in detail herein, it will be apparent to those skilled in the relevant art that various modifications, additions, substitutions, and the like can be made and these are therefore considered to be within the scope of the claims which follow. For example, although the examples illustrated include a REMS layer and a REDS layer as shown, additional layers, including additional layers of REMS and REDS, may be provided, including layers between, below, and above the layers as shown, and dopant(s) may be provided to none, some, or all of the additional layers.

## Claims

1. An environmental barrier coating system (300) for a component (400) of a gas turbine, comprising:
at least one rare earth disilicate layer (340); and
at least one rare earth monosilicate layer (350),
wherein at least one of the at least one rare earth disilicate layer (340) or the at least one rare earth monosilicate layer (350) includes an alkaline earth oxide dopant, **characterized in that**
the at least one rare earth monosilicate layer (350) is doped and an amount of the alkaline earth oxide dopant is 1-25 mole % of the layer, and **in that**
the amount of the dopant is limited such that the dopant either reduces the coefficient of thermal expansion or increases the coefficient of thermal expansion of the at least one rare earth monosilicate layer (350) by less than 10%, and
wherein the addition of the alkaline earth oxide dopant promotes the formation of an apatite phase and increases the chemical activity of the alkaline earth oxide to a level that reduces the driving force for chemical reaction with dust deposits.

2. The environmental barrier coating system (300) according to claim 1, wherein the alkaline earth oxide dopant is CaO.

3. A component (400) of a gas turbine engine, wherein the component (400) is coated with the environmental barrier coating system (300) according to claim 1.

4. A gas turbine engine including the component (400) according to claim 3.

## Patentansprüche

1. Umweltbarrierebeschichtungssystem (300) für eine Komponente (400) einer Gasturbine, umfassend:
mindestens eine Schicht aus Seltenerd-Disilikat (340); und
mindestens eine Schicht aus Seltenerd-Monosilikat (350),
wobei mindestens eine der mindestens einen Schicht aus Seltenerd-Disilikat (340) oder der mindestens einen Schicht aus Seltenerd-Monosilikat (350) einen Erdalkalioxid-Dotierstoff einschließt, **dadurch gekennzeichnet, dass**
die mindestens eine Schicht aus Seltenerd-Monosilikat (350) dotiert ist und eine Menge des Erdalkalioxid-Dotierstoffes zu 1 bis 25 Mol- % der Schicht beträgt, und **dadurch, dass**
die Menge des Dotierstoffes derart begrenzt ist, dass der Dotierstoff entweder den Wärmeausdehnungskoeffizienten reduziert oder den Wärmeausdehnungskoeffizienten der mindestens einen Schicht aus Seltenerd-Monosilikat (350) um weniger als 10 % erhöht, und
wobei die Zugabe des Erdalkalioxid-Dotierstoffes die Ausbildung einer Apatitphase fördert und die chemische Aktivität des Erdalkalioxids auf ein Niveau erhöht, das die Antriebskraft für die chemische Reaktion mit Staubablagerungen reduziert.

2. Umweltbarrierebeschichtungssystem (300) nach Anspruch 1, wobei der Erdalkalioxid-Dotierstoff CaO ist.

3. Komponente (400) eines Gasturbinentriebwerks, wobei die Komponente (400) mit dem Umweltbarrierebeschichtungssystem (300) nach Anspruch 1 beschichtet ist.

4. Gasturbinentriebwerk, einschließlich der Komponente (400) nach Anspruch 3.

## Revendications

1. Système de revêtement barrière environnementale (300) pour un composant (400) d'une turbine à gaz, comprenant :
au moins une couche de disilicate de terres rares (340) ; et
au moins une couche de monosilicate de terres rares (350),
dans lequel au moins l'une de l'au moins une couche de disilicate de terres rares (340) ou de l'au moins une couche de monosilicate de terres rares (350) comporte un dopant d'oxyde alcalino-terreux, **caractérisé en ce que**
l'au moins une couche de monosilicate de terres rares (350) est dopée et une quantité du dopant d'oxyde alcalino-terreux est de 1 à 25 % en moles de la couche, et **en ce que**
la quantité du dopant est limitée de telle sorte que le dopant soit réduit le coefficient de dilatation thermique soit augmente le coefficient de dilatation thermique de l'au moins une couche de monosilicate de terres rares (350) de moins de 10 %, et
dans lequel l'addition du dopant d'oxyde alcalino-terreux favorise la formation d'une phase apatite et augmente l'activité chimique de l'oxyde alcalino-terreux à un niveau qui réduit la force d'entraînement pour une réaction chimique avec des dépôts de poussière.

2. Système de revêtement barrière environnementale (300) selon la revendication 1, dans lequel le dopant d'oxyde alcalino-terreux est CaO.

3. Composant (400) d'un moteur à turbine à gaz, dans lequel le composant (400) est revêtu du système de revêtement de barrière environnementale (300) selon la revendication 1.

4. Moteur à turbine à gaz comportant le composant (400) selon la revendication 3.
